# EUROPEAN PATENT APPLICATION

(11) **EP 2 565 370 A1**
(43) Date of publication of application: **06.03.2013**
(21) Application number: 11179253.7
(22) Date of filing: 30.08.2011
(51) Int. Cl.: E21B 41/00, E21B 47/10, E21B 47/12, E21B 47/00, E21B 47/06, G01B 11/16

(54) **Subsea pipe monitoring system**

(71) Applicant: SIEMENS AKTIENGESELLSCHAFT, 80333 München (DE)
(72) Inventor: Brekke, Endre, 7049 Trondheim (NO); Dessen, Fredrik, 7032 Trondheim (NO)

(57) **Abstract**

A subsea pipe (11) monitoring system (10) is provided. The subsea pipe monitoring system comprises an optical fibre (22,32) and plural individual sensor elements (21,31) arranged at different positions along the optical fibre. Each sensor element comprises at least a fibre Bragg grating (25) in the optical fibre. A sensor unit (12) is further provided towards which the optical fibre is coupled. The sensor unit is adapted to detect changes in the physical parameter monitored by a sensor element.

## Description

### Field of the invention

The invention relates to a subsea pipe monitoring system. The invention further relates to the use of an optical fibre for the monitoring of a subsea pipe.

### Background

Oil platforms are often used in offshore oil and gas production. Hydrocarbons extracted from a subsea well are transported up to the oil platform in the production process and are loaded onto transport vessels, which take the hydrocarbons to land. Further, subsea processing facilities are known, in which processing equipment is relocated to the ocean floor. A subsea pipe can connect the subsea processing facility to a topside processing facility located on a platform onshore. Furthermore, hydrocarbons such as oil or gas are often transported over long distances using pipelines. If the transport route crosses sea, a pipe can be run subsea on the ocean floor.

Naturally, subsea pipes are located in substantial depths of water and are thus not easily accessible. Yet the subsea pipe needs to be monitored for detecting changes in the conditions of the subsea pipe and for preventing damage to the subsea pipe. Due to the water depth in which the subsea pipe is located, the monitoring of the subsea pipe is generally difficult.

Sensors may be provided on the subsea pipe for monitoring the subsea pipe from a remote location, such as a topside installation. A possibility of performing such monitoring would be the installation of multiple single sensors, which may measure parameters such as temperature, pressure, stress, vibration or the like. Each sensor can be provided with an electrical interface using which a topside data collection system can interface the sensor. As the subsea pipe can have a considerable length, for example tens to hundreds of kilometers, such monitoring system would be very complex and very costly. Accordingly, subsea pipes are at present not being monitored to any significant degree.

It is desirable to provide monitoring of subsea pipes that is less complex and cost efficient. Further, it is desirable to enable the monitoring of a subsea pipe over a considerable length of the pipe.

### Summary

Accordingly, there is a need for an improved subsea pipe monitoring system, in particular for a subsea pipe monitoring system which obviates at least some of the drawbacks mentioned above.

This need is met by the features of the independent claims. The dependent claims describe embodiments of the invention.

An embodiment of the invention provides a subsea pipe monitoring system, which comprises an optical fibre and plural individual sensor elements arranged at different positions along the optical fibre. Each of the sensor elements comprises at least a fibre Bragg grating in the optical fibre. Each sensor element is adapted to monitor a physical parameter relating to the subsea pipe or its surroundings, wherein the optical fibre with the plural sensor elements forms a sensor strand. The sensor strand is adapted to be mounted to the subsea pipe that is to be monitored. The sensor elements enable the monitoring of the physical parameter at the positions along the subsea pipe at which the fibre Bragg gratings are located. The subsea pipe monitoring system further comprises a sensor unit towards which the optical fibre is coupled. The sensor unit is adapted to detect changes in the physical parameter monitored by a sensor element by detecting changes in the reflection of light by the respective fiber Bragg grating of the sensor element.

It may thus be possible to monitor the physical parameter which can be indicative of a condition of the subsea pipe at a number of the locations by means of a single sensor strand. Accordingly, the subsea pipe monitoring system has a low complexity and is cost efficient to implement. Further, it is possible that all sensor elements monitor the same parameter, so that the parameter can be determined over a considerable length of the subsea pipe. It is also possible to monitor different parameters with different sensor elements, so that by a single sensor strand, different types of information can be obtained on the condition of the subsea pipe, such as temperature and strain. Also, it is possible to measure more than one parameter with a single sensor element. A very effective and compact monitoring system for the subsea pipe can thus be provided.

In an embodiment, the sensor strand is mounted to the subsea pipe such that the optical fibre is extending in the longitudinal direction of the subsea pipe. Changes in the physical parameter over a length of subsea pipe can thus be observed by the subsea pipe monitoring system.

The sensor strand may be mechanically mounted to the pipe, e.g. using clamps or the like. In other embodiments, the sensor strand, in particular the optical fibre may be embedded in an outer jacket or casing of the subsea pipe. A very compact monitoring system that is rather insensitive against external influences may thus be obtained.

The subsea pipe monitoring system may comprise at least two, preferably at least three sensor strands. The sensor strands may run in parallel in longitudinal direction along a section of the subsea pipe. Each sensor strand has a configuration as outlined above or further below, i.e. it comprises an optical fibre and plural individual sensor elements. By making use of several sensor strands, a more comprehensive monitoring of the subsea pipe may be achieved. In particular, physical parameters, such as a bending of the pipe, may be monitored by two or more sensor strands, which may not be possible by means of a single sensor strand.

The sensor unit may comprise a single physical interface for each sensor strand. Accordingly, if two or three sensor strands are used, the sensor unit only needs to comprise two or three physical interfaces. Thus, even for a large number of sensor elements, the number of physical interfaces can be reduced significantly and can be kept rather low. Each sensor strand may for example comprise more than five, preferably more then ten or even more than 20 sensor elements. Even with only a physical interface of the sensor unit, it is thus possible to monitor the condition of the subsea pipe at a relatively large number of positions along the subsea pipe.

The sensor elements of at least a first of the sensor strands may be located at the same longitudinal position along the subsea pipe as the sensor elements of a second of the sensor strands. The sensor strands may be provided on different sides of the subsea pipe, so that at a particular longitudinal position on the subsea pipe, the physical parameter can be monitored on the two or more different sides. As an example, at a number of predefined longitudinal positions along the subsea pipe, a sensor element of each sensor strand may be located, e.g. distributed over a circumference of the subsea pipe.

In an embodiment, the subsea pipe monitoring system comprises at least three sensor strands, the sensor strands being equidistantly spaced in a circumferential direction of the subsea pipe. In such configuration, the monitoring of a bending of the subsea pipe in any direction may become possible. This is particularly advantageous, as an excessive bending of the subsea pipe may lead to damage of the subsea pipe.

In an embodiment, the at least two sensor strands are ranged on the subsea pipe in such a way that the sensor unit is enabled to detect a bending of the subsea pipe by monitoring the physical parameter by means of the sensor elements of the at least two sensor strands. As an example, if two sensor strands are provided on opposite sides of the subsea pipe, a bending of the subsea pipe in the plane of the two sensor strands can be detected by monitoring strain on the sensors as the physical parameter by means of the sensor elements. If the monitoring system comprises at least three sensor strands, which are circumferentially distributed around the subsea pipe, a bending in any direction can be monitored, again by monitoring strain as the physical parameter. When a subsea pipe is bent, the wall of the pipe is compressed on one side and is stretched at the other, which can for example be detected by the sensor elements of the sensor strands, when these are implemented as strain sensors.

The physical parameter that is monitored by the sensor elements of the sensor strand may be at least one of strain, temperature or pressure. As mentioned above, different sensor elements may monitor different physical parameters, or a single sensor element may monitor more than one of these physical parameters.

In an embodiment, the sensor unit may be arranged subsea in a subsea enclosure. The subsea pipe monitoring system can comprise the subsea enclosure, the sensor unit being arranged in the subsea enclosure. Thus, the physical parameter can be measured subsea and only the measurement result may be communicated to the topside, or may be used subsea for a controlling operation. The sensor unit may be adapted to be arranged in a pressure compensated enclosure, enabling the use of a thin walled enclosure, or may be adapted to be arranged in a pressure resistant enclosure that is maintained at an inside pressure of close to one atmosphere (e.g. between 1 and 5 bar), thereby enabling the use of standard electronic and optical components for sensing.

At least some of the sensor elements of the sensor strand may be adapted to monitor strain. In these sensor elements, a length of the optical fibre which comprises the fibre Bragg grating of the sensor element may be fixedly mounted to the subsea pipe such that a strain induced in the subsea pipe results in a strain being induced in the length of optical fibre. As an example, if the region of the subsea pipe towards which the strain sensor element is mounted is stretched, the portion of the optical fibre comprising the fibre Bragg grating is stretched as well, the strain applied to the fibre being optically detected by the sensor unit.

At least some of the sensor elements of the sensor strand may be adapted to monitor pressure. These sensor elements may comprise a pressure transducer that is capable of transducing a pressure into strain. The fibre Bragg grating of the sensor element may be arranged so as to sense strain induced in the pressure transducer. This way, the fibre Bragg grating may even be used as a pressure detector. Preferably, the pressure inside the subsea pipe is detected. Accordingly, such configuration of the subsea pipe monitoring system allows the monitoring of the subsea pipe inside pressure at different positions over a length of the subsea pipe. This may enable the detection of a pressure drop inside the subsea pipe, which may indicate a leak or the formation of hydrates.

The pressure transducer may comprise an element, such as a piston or the like, which is moved or stressed by an applied pressure, resulting in strain applied in the element or in another element coupled thereto. Pressure may for example push a piston towards which a piece of material is coupled, thus inducing strain in the piece of material. This can be monitored by coupling a portion of the optical fibre comprising the fibre Bragg grating to the piece of material. It should be clear that the particular implementation of such pressure transducer will depend on the particular application in which pressure is to be measured and the configuration of the subsea pipe.

At least some of the sensor elements of the sensor strand can be adapted to monitor strain and/or temperature. Such sensor elements may comprise at least two fibre Bragg gratings.

As an example, one of the fibre Bragg gratings may be mechanically decoupled from the subsea pipe. This may enable the decoupled fibre Bragg grating to perform a measurement of temperature that is independent of strain in the subsea pipe. This may for example be achieved by providing some slack in the optical fibre at the position of the fibre Bragg grating.

In another example, each of the at least two fibre Bragg gratings of the sensor element may be adapted to reflect light of a different wave length. Thereby, a separation of changes in the reflection of light by the fibre Bragg gratings caused by changes in temperature and by changes in strain may be separated. This may be done by a corresponding analysis of the reflected light at the sensor unit. As the sensitivity of the optical properties of the fibre Bragg grating to temperature depends stronger on the wavelength then the sensitivity to strain, it is possible to differentiate between the two effects by making use of two different fibre Bragg gratings operated at different reflection wave― lengths.

Other possibilities of measuring both temperature and strain with fibre Bragg grating exist and may be used with the subsea pipe monitoring system.

In an embodiment, a length of the optical fibre including a sensor element that is adapted to measure strain may be arranged around the circumference of the subsea pipe, so as to enable the monitoring of circumferential strain in the subsea pipe. This way, slight changes in the diameter of the pipe may be detected. Slight changes in the diameter may be caused by changes in the inside pressure, which may be detected from outside the pipe this way.

The subsea pipe may be adapted to transport hydrocarbons. In particular, it may transport a three-phase mixture of hydrocarbons, including oil and gas.

In an embodiment, the fibre Bragg gratings of the sensor elements disposed along the optical fibre are each configured to reflect light of a different wavelength. The sensor unit is adapted to supply light of the different wavelengths to the optical fibre and to collect and detect light reflected by the plural fibre Bragg gratings from the optical fibre. The sensor unit is further adapted to resolve the wavelength of the collected light so as to be capable of attributing detected light of a particular wavelength to the reflection of a particular fibre Bragg grating. Such implementation may enable a clear identification of the sensor from which a optical signal is received at the sensor unit via the optical fibre.

The subsea pipe monitoring system may further comprise a communication unit arranged in the subsea enclosure and interfacing the sensor unit. The communication unit may be adapted to communicate with a topside installation and to transmit values measured by the sensor elements for the physical parameter to the topside installation. The topside installation may be located on a vessel or a platform, or may be an onshore installation. A remote monitoring of the subsea pipe from a topside location is thus enabled.

Another embodiment of the invention provides the use of an optical fibre comprising plural fibre Bragg gratings at different positions along the optical fibre for a monitoring of a subsea pipe, the fibre Bragg gratings forming sensor elements for monitoring a physical parameter relating to the subsea pipe or its surroundings, each sensor element comprising at least one fibre Bragg grating, wherein the optical fibre and the sensor elements form a sensor strand that is, in use, mounted to the subsea pipe, thereby enabling the monitoring of the physical parameter at the positions along the subsea pipe at which the fibre Bragg gratings are located. The sensor strand including the optical fibre with the Bragg gratings may be used in any of the configurations outlined above and may accordingly achieve similar advantages.

The features of the embodiments of the invention mentioned above and those yet to be explained below can be combined with each other unless noted to the contrary.

### Brief description of the drawings

The foregoing and other features and advantages of the invention will become further apparent from the following detailed description read in conjunction with the accompanying drawings. In the drawings, like reference numerals refer to like elements.
Figure 1 is a schematic diagram illustrating a subsea pipe monitoring system according to an embodiment of the invention.
Figure 2 is a schematic diagram illustrating a sectional view along line AB of Figure 1 showing a subsea pipe onto which three sensor strands of the subsea pipe monitoring system are mounted.
Figure 3 is a schematic diagram illustrating two sensor elements of embodiments of the invention in more detail.

### Detailed description

In the following, the embodiments illustrated in the accompanying drawings are described in more detail. It is to be understood that the following description is only illustrative and non restrictive. The drawings are only schematic representations, and elements in the drawings are not necessarily to scale with each other.

Furthermore, it should be noted that the functional bocks or units shown in the drawings may comprise several components or may be implemented in a common unit.

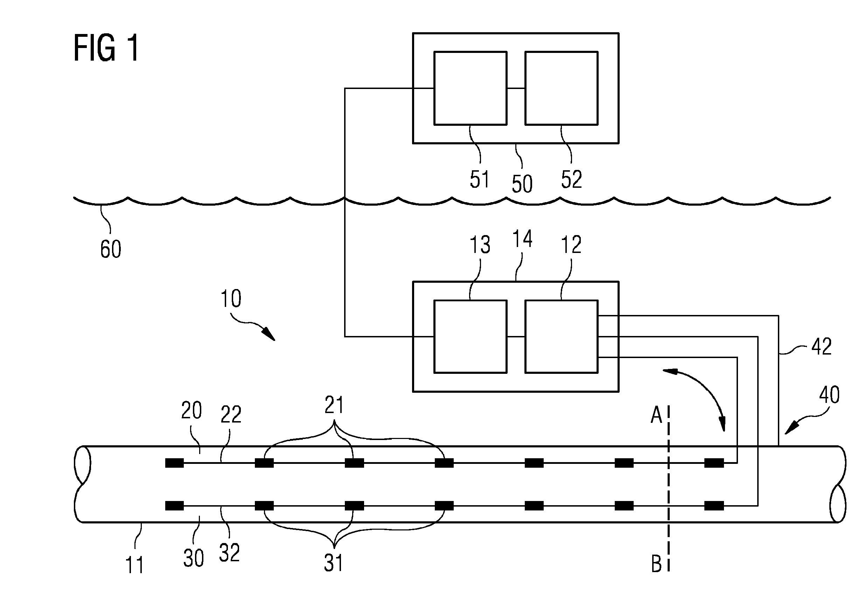

Figure 1 shows a subsea pipe monitoring system 10 which is adapted to measure one or more physical parameters at different positions along the subsea pipe 11. The physical parameter(s) are related to the subsea pipe or its surroundings. They may be indicative of the condition of the subsea pipe or of surrounding conditions, such as wall temperature of the pipe, pipe inside pressure, strain in the pipe, bending of the pipe, temperature and/or pressure of water surrounding the pipe, or the like.

The subsea pipe monitoring system 10, in the following abbreviated as monitoring system, comprises a sensor unit 12 located in a subsea enclosure 14. The sensor unit 12 comprises one or more physical interfaces towards which a sensor strand is coupled. In the example of figure 1, the sensor unit 12 comprises three interfaces, towards which three sensor strands 20, 30 and 40 are coupled.

Note that in other embodiments, the monitoring system 10 may comprise a different number of sensor strands coupled to the sensor unit 12. Sensor strand 20 comprises the optical fibre 22 and plural sensor elements 21. The sensor elements 21 are disposed at different positions along the optical fibre 22. Each of the sensor elements 21 is adapted to measure one or more physical parameters. Such parameters can for example be strain, temperature or pressure.

Each of the sensor elements 21 comprises at least one fibre Bragg grating in the optical fibre 22. The fibre Bragg grating is either directly or indirectly sensitive to strain, temperature or pressure. For example in case of a pressure sensing element, a pressure transducer may be provided in the sensor element, which transduces an applied pressure into strain to which the fibre Bragg grating is sensitive.

The fibre Bragg grating can be integrated by a periodic modulation of the refractive index of the core of the optical fibre 22. Light that is propagating in the optical fibre 22 will be reflected by such fibre Bragg grating if it has a particular wavelength, which is the Bragg wavelength of the fibre Bragg grating. A change in temperature and the application of strain to the optical fibre section comprising the fibre Bragg grating can lead to a change in the optical properties of the fibre (e.g. refractive index) or to a change in the period of the refractive index modulations of the fibre Bragg grating. This can result in a shift of the Bragg wavelength of the fibre Bragg grating. A sensitivity of the fibre Bragg grating to temperature and strain is thus achieved.

A shift in the Bragg wavelength of a fibre Bragg grating of a particular sensor element 21 can be detected by means of sensor unit 12. For this purpose, sensor unit 12 emits light of different wavelength into the optical fibre 22 and measures the intensity of the light reflected by the fibre Bragg grating at these wave lengths. The maximum reflected intensity is obtained at the Bragg wavelength, which can thus be determined. As changes in the temperature or strain lead to a change of the Bragg wavelength, temperature and/or strain changes can be detected by sensor unit 12 by means of a spectroscopic method, i.e. by analyzing the spectrum of the reflected and detected light.

Sensor unit 12 is adapted to be capable of measuring a shift of the Bragg wavelength of the fibre Bragg gratings of plural sensor elements 21. This can be achieved by providing the fibre Bragg gratings of the sensor elements 21 each with a different period of refractive index modulation, so that each of the fibre Bragg gratings has a different Bragg wavelength.

Sensor unit 12 can now comprise a broadband light source admitting light over a wavelength spectrum and a tuneable filter in order to scan through wavelengths which are injected into the optical fibre 22. As the tuneable filter is tuned through different wavelengths over time, the Bragg gratings of different sensor elements 21 will reflect the injected light at different times, which is recorded by sensor unit 12. The reflection peak of each Bragg grating in the optical fibre 22 can thus be observed, and changes in the Bragg wave length of the Bragg gratings in optical fibre 22 can be measured. Accordingly, the fibre Bragg grating of each sensor element 21 can be individually "read out".

It should be clear that this is only one possible implementation of the detection system of the subsea pipe monitoring system 10. Other implementations, such as using a tuneable light source, e.g. a tuneable laser, providing a reference Bragg grating for reference measurements, and the like are certainly also conceivable. As an example, the measurement of the Bragg wavelength of the fibre Bragg gratings of monitoring system 10 may be performed as outlined in the document US 6,097,487, which is incorporated herein by reference in its entirety.

Sensor elements 21 may be implemented in different ways. A sensor element 21 may be adapted to measure a single physical parameter, or to measure two or more physical parameters.

At least some of the sensor elements 21 can be configured for measuring strain and/or temperature. As mentioned above, both temperature and strain influence the optical properties of the fibre Bragg grating of the sensor element 21. For obtaining a sensor element that measures only temperature, a length of the optical fibre 22 comprising the Bragg grating may be mechanically decoupled from the subsea pipe 11. As an example, a cavity may be provided in which a loop or a slack of the optical fibre is disposed. Strain in the subsea pipe 11 or in a mount of the optical fibre will then not be transduced to the fibre Bragg grating. The fibre Bragg grating may then only be sensitive to changes in temperature. Accordingly, a shift of the Bragg wavelength of the fibre Bragg grating can directly be attributed to a corresponding change in temperature.

For a pure strain sensor, two fibre Bragg gratings may be provided. A length of the optical fibre 22 comprising the first fibre Bragg grating may be fixedly mounted to the subsea pipe 11 so that strain in the subsea pipe 11 translates into a strain in the optical fibre 22, which can be detected by a shift in the Bragg wavelength of the first fibre Bragg grating. As the first fibre Bragg grating will also be sensitive to temperature, a second fibre Bragg grating can be provided in the sensor element 11 which is configured as mentioned above i.e. configured to measure temperature only. In sensor unit 12, the temperature change can thus be determined by means of the second fibre Bragg grating. The effect of temperature on the Bragg wavelength of the first fibre Bragg grating can thus be estimated and removed, e.g. by a corresponding calculation performed at sensor unit 12. An isolated strain measurement thus becomes possible by means of a sensor unit 21. Note that in such configuration, both temperature and strain are measured independently by means of a single sensor element 21.

In other configurations, the sensor element 21 may comprise two fibre Bragg gratings having rather different Bragg wavelengths. As an example, one fibre Bragg grating may have a Bragg wavelength of 800 nm while another fibre Bragg grating may have a Bragg wavelength of 1300 nm. Note that these numbers are only examples given for the purpose of illustration, and that the Bragg wavelength of the Bragg gratings will be different for each sensor element 21 (for the purpose of differentiation) .

The sensitivity of the Bragg grating to changes in temperature depends on the Bragg wavelength of the Bragg grating. The change in sensitivity with Bragg wavelength is different for temperature and for strain. Accordingly, by making use of two fibre Bragg gratings having rather different Bragg wavelengths, the effects of temperature and strain can be separated. Accordingly, an independent measurement of both temperature and strain becomes possible by making use of two such fibre Bragg gratings.

Note that there are further methods of independently measuring temperature and strain in one sensor element 21 by means of fibre Bragg gratings, and such methods may also be used in the monitoring system disclosed herein.

One or more sensor elements 21 of the sensor strand 20 may additionally or alternatively be configured to detect pressure. The sensor element may detect the ambient pressure, yet preferably it is configured to detect the pressure inside subsea pipe 11. There are several possibilities of realizing a pressure sensor by means of the fibre Bragg grating in optical fibre 22. One possibility is to provide a length of optical fibre comprising one or more fibre Bragg gratings which is disposed circumferentially around the subsea pipe 11. If subsea pipe 11 expands or contracts radially, e.g. due to a pressure change inside the subsea pipe 11, this can be detected as a strain at the outer periphery of the pipe by means of the one or more fibre Bragg gratings of sensor element 21. With a corresponding calibration, the determination of an absolute pressure may be possible. Another possibility is to provide a pressure transducer in the sensor element 21, as explained in more detail further below. The pressure transducer converts a pressure into a strain, which can be measured by means of the fibre Bragg grating. Again, different configurations are conceivable. The pressure transducer may be mounted outside subsea pipe 11, yet it may be in fluid communication with the inside of subsea pipe 11. On the other hand, the pressure transducer may be provided inside the subsea pipe 11.

Sensor strand 20 of monitoring system 10 may thus be provided with different types of sensor elements 21. Some sensor elements 21 may be configured to measure only one of the above mentioned physical parameters, while other sensor elements 21 may be configured to measure two or more of the physical parameters. In an embodiment, each of the sensor elements 21 of the sensor strand 20 is configured to measure the same one or more physical parameters, in particular to measure at least strain.

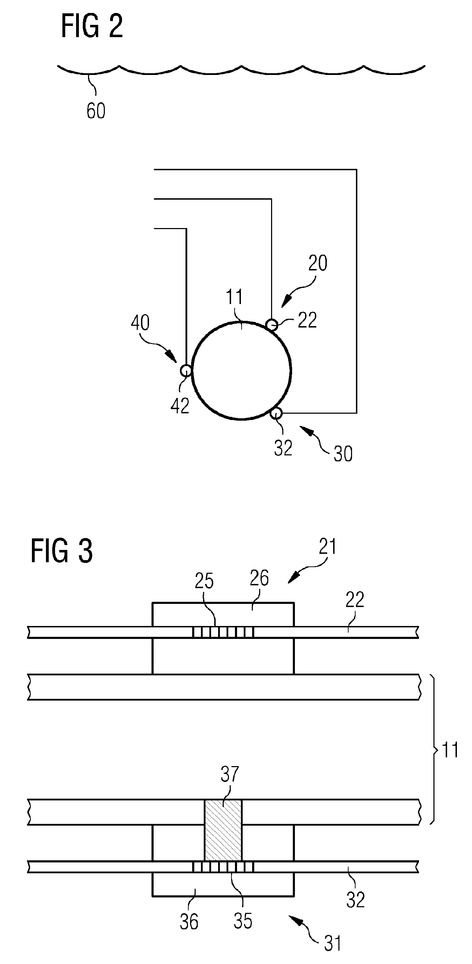

The monitoring system 10 may comprise one, two, three or even more of the above outlined sensor strands, each comprising plural sensor elements in the above outlined configurations. In figure 1, an example is illustrated in which the monitoring system 10 comprises three sensor strands 20, 30 and 40. Sensor strand 30 comprises the optical fibre 32 and the sensor elements 31, and sensor strand 40 comprises the optical fibre 42 and corresponding sensor elements. Note that in the presentation of figure 1, sensor strand 40 is not visible as it is mounted behind the subsea pipe 11. This can more clearly be seen from figure 2, which shows a section through the subsea pipe 11 along line A-B.

In figure 2, the three sensor strands 20, 30 and 40 mounted to the outside of subsea pipe 11 can be observed. Exemplary connections of each sensor strand towards the sensor unit 12 by means of the respective optical fibre are further indicated. In the embodiment of figures 1 and 2, the sensor strands 20, 30 and 40 are spaced equidistantly around the circumference of subsea pipe 11. It should be clear that other arrangements are also conceivable, for example if measurements are to be performed on a particular side of the subsea pipe 11. Also, more than three sensor strands may be provided, and may again be spaced equidistantly around subsea pipe 11, or may be arranged in other configurations, depending on the application.

Each of the sensor strands 20, 30 and 40 comprises plural sensor elements disposed along the respective optical fibre of the sensor strand. In the example of figure 1, a sensor element of each sensor strand 20, 30 and 40 is disposed at predefined positions along the longitudinal direction of subsea pipe 11. At the same position on subsea pipe 11, the one or more physical parameters can thus be measured on different sides of the subsea pipe. In configurations in which each of the sensor elements located at the circumferential position is configured to measure strain, it is possible to determine a bending of the subsea pipe 11 in any direction. If subsea pipe 11 is bent in a direction, the subsea pipe will generally be stretched at one side and compressed at the other. With three sensor strands arranged as illustrated in figures 1 and 2, strain can be detected at different circumferential positions of the subsea pipe. The circumferential position of a stretching of the subsea pipe can thus be located. Accordingly, it becomes possible to determine whether subsea pipe 11 is bent, and to estimate in which direction the subsea pipe 11 is bent. Accordingly, monitoring system 10 can provide measurements of the bending of subsea pipe 11 at different positions along the subsea pipe. The resolution of the determination into which direction subsea pipe 11 is bent can be improved by increasing the number of sensor strands mounted to subsea pipe 11.

Independent on the configuration of the individual sensor elements 21, the sensor strand 20 may be mounted in different ways to subsea pipe 11. One possibility is to provide clamps which each comprise a sensor element 21. By means of the clamp, the sensor element 21 can be firmly attached to subsea pipe 11, and strain induced into subsea pipe 11 will also be induced in the sensor element, and can thus be measured. Other possibilities to mount sensor strand 20 to subsea pipe 11 include the embedding of the optical fibre 22 comprising the fibre Bragg gratings into a sheath or a covering of the subsea pipe 11. A more direct contact between the optical fibre comprising the fibre Bragg gratings and the subsea pipe 11 may thus be achieved.

Optical fibre 22 is a single optical fibre. Other embodiments are also conceivable in which the optical fibre 22 comprises several segments of optical fibre which are connected to each other by means of optical connectors. Although such configuration enables a changing of the number of sensor elements 21 in the sensor strand 20, and is thus more flexible with respect to length and number of sensor elements, a single optical fibre has the advantage that optical losses that can occur at optical connectors can be avoided.

Sensor unit 12 is adapted to generate an electrical signal corresponding to the measured physical parameter for each sensor element. It may generate a digital signal, or an analogue signal, both types of signals being indicative for the measured physical parameter. As an example, sensor unit 12 may comprise components for evaluating a detected shift in the Bragg wavelength of a fibre Bragg grating of a sensor element, and to determine a relative change in one or more measured physical parameters, or an absolute value of one or more measured physical parameters. This may occur as outlined further above.

A communication unit 13 is further provided in the subsea enclosure 14 which interfaces the sensor unit 12. The information provided by sensor unit 12, in particular absolute values or relative changes of the measured physical parameters are provided by sensor unit 12 to communication unit 13. Communication unit 13 interfaces a communication unit 51 comprised in a topside installation 50. The topside communication unit 51 and the subsea communication unit 13 may for example communicate via a communication line of an umbilical. This may occur according to a network communication scheme, or each communication unit may comprise a modem, thus enabling a communication over longer distances. The information received at topside installation 50 of sensor unit 12 via the communication units is then supplied to a computing unit 52. Computing unit 52 can comprise components common to state of the art computing units, in particular a CPU and a data storage. The measurements of the physical parameters by means of the sensor strands can thus be further evaluated and analyzed by means of computing unit 52.

Reference symbol 60 indicates the water level. Note that the drawing is not to scale, and that the distance between the subsea enclosure 14 and the topside installation 50 will be relatively large. The subsea pipeline monitoring system 10 may for example be adapted to be installed in water depth of more than 500 meters, or even more than 1000 or more than 2000 meters. It may thus be employed to monitor the condition of a subsea pipe located at a depth of e.g. between 1000 and 4000 meters.

Please note that the above explanations given with respect to the sensor strands 20, 30 and to the corresponding sensor elements 21, 31 and the optical fibres 22, 32 are similarly applicable to the other sensor strands of the monitoring system 10 and the other sensor elements, e.g. the sensor strand 40 and its sensor elements.

Fig. 3 is a sectional side view of a section of the subsea pipe illustrating two sensor elements that can be implemented in the subsea pipe monitoring system of Figs. 1 and 2.

Fig. 3 shows a schematic sectional side view of the subsea pipe 11, in which two possible implementations of the sensor elements 21, 31 are shown. Only for the purpose of illustration, a simplified sensor element 21 in form of a strain sensor of the sensor strand 20 and a simplified sensor element 31 in form of a pressure sensor of sensor strand 30 are shown. It should be clear that each sensor strand may comprise one or more sensor elements having a configuration similar to the one of sensor elements 21 or 31 of Fig. 3.

Sensor element 21 of Fig. 3 comprises a mount 26 using which the optical fibre 22 is fixedly mounted to the subsea pipe 11, the wall of which is shown in the sectional view. The mount may for example comprise a type of clamp that surrounds the subsea pipe 11 circumferentially, and that is firmly attached to the subsea pipe. In particular, strain in the subsea pipe 11 is transduced into the mount 26 and thus into the optical fibre 22 at the mounting position. The fibre Bragg grating 25 of the sensor element 21 is provided at the mounting position. Strain applied to the fibre 22 at the mounting position will lead to a change in the period of the fibre Bragg grating 25, which is detected optically by sensor unit 12, as outlined above in detail. Note that as mentioned above, an additional fibre Bragg grating may be provided in sensor element 21 so as to enable a separation of temperature and strain induced optical effects in the fibre Bragg grating 25.

The sensor element 31 is a pressure sensor. Again, the optical fibre 32 is fixedly mounted to the subsea pipe using the mount 36, which again may be a clamp or the like. Not that a single clamp may be used to attach several sensor elements of different sensor strands to the subsea pipe 11 at a particular longitudinal position thereof.

The sensor element 31 further comprises a pressure transducer 37. Pressure transducer 37 transduces the pressure inside the subsea pipe 11 to a strain applied to optical fibre 32. In the region where the strain is applied to the optical fibre, the fibre Bragg grating 35 of the sensor element 31 is arranged. Again, applied strain will lead to a change in the reflective properties of the fibre Bragg grating, in particular the Bragg wavelength of the grating 35, which can be detected by sensor unit 12. The sensor element 31 can thus be used to monitor pressure changes inside subsea pipe 11, or may with the appropriate calibration determine the absolute pressure inside the subsea pipe 11. Note that Fig. 3 only shows a very simple implementation of a pressure transducer. Preferably, the pressure transducer is configured such that no opening in the wall of the subsea pipe 11 is required.

Several advantages may be achieved by the subsea pipe monitoring system 10. As the sensor elements are based on the reflection of light, they are passive elements, and accordingly to not require any power supply. Furthermore, as each fibre Bragg grating reflects light of a particular wavelength, other wavelengths are essentially unaffected by the fibre Bragg gratings, so that a plurality of sensor elements can be realized along a single optical fibre. This corresponds to several detection channels being realized on a single optical fibre, by a type of optical frequency multiplexing.

Furthermore, the sensor elements 21 can be used to measure a range of physical quantities. In principal, any quantity that directly or indirectly influences the optical properties of the fibre Bragg gratings can be measured. If there is no direct influence, a corresponding transducer can be provided, which may for example generate a strain that can be detected by the fibre Bragg grating of the sensor element. The sensor elements and sensor strands furthermore have a simple setup and are largely unaffected by electromagnetic fields. Several sensor elements placed adjacent to each other accordingly do not disturb each other. Furthermore, plural sensor elements can be interrogated by the sensor unit by means of only a single physical interface. A number of sensor elements can thus be realized that is significantly higher than the number of optical fibres and the number of required interfaces to the sensor unit.

It should be clear that the features of the embodiments laid out above may be combined. The present embodiments are to be considered in all respect as illustrative and non-restrictive.

## Claims

1. A subsea pipe monitoring system, comprising
- an optical fibre (22),
- plural individual sensor elements (21) arranged at different positions along the optical fibre (22), wherein each sensor element (21) comprises at least a fibre Bragg grating (25) in the optical fibre (22), each sensor element (21) being adapted to monitor a physical parameter relating to the subsea pipe (11) or its surroundings, wherein the optical fibre (22) with the plural sensor elements (21) forms a sensor strand (20),
wherein the sensor strand (20) is adapted to be mounted to the subsea pipe (11) that is to be monitored, the sensors elements (21) enabling the monitoring of the physical parameter at the positions along the subsea pipe (11) at which the fibre Bragg gratings (25) are located, the subsea pipe monitoring system (10) further comprising
- a sensor unit (12) towards which the optical fibre (22) is coupled, the sensor unit (12) being adapted to detect changes in the physical parameter monitored by a sensor element (21) by detecting changes in the reflection of light by the respective fibre Bragg grating (25) of the sensor element (21).

2. The subsea pipe monitoring system according to claim 1, wherein the sensor strand (20) is mounted to the subsea pipe (11) such that the optical fibre (22) is extending in the longitudinal direction of the subsea pipe (11).

3. The subsea pipe monitoring system according to any of the preceding claims, wherein the subsea pipe monitoring system (10) comprises at least two, preferably at least three sensor strands (20, 30, 40), the sensor strands running in parallel in longitudinal direction along a section of the subsea pipe (11), each sensor strand comprising an optical fibre (22, 32, 42) each with plural individual sensor elements (21, 31).

4. The subsea pipe monitoring system according to claim 3, wherein the sensors elements (21) of at least a first of the sensor strands (20) are located at the same longitudinal positions along the subsea pipe (11) as the sensor elements (31) of a second of the sensor strands (30).

5. The subsea pipe monitoring system according to claim 3 or 4, wherein the at least two sensor strands (20, 30) are disposed on opposite sides of the subsea pipe (11).

6. The subsea pipe monitoring system according to any of claims 3-5, wherein the subsea pipe monitoring system (10) comprises at least three sensor strands (20, 30, 40), the sensor strands being equidistantly spaced in a circumferential direction of the subsea pipe (11).

7. The subsea pipe monitoring system according to any of claims 3-6, wherein the at least two sensor strands (20, 30) are arranged on the subsea pipe (11) in such way that the sensor unit (12) is enabled to detect a bending of the subsea pipe (11) by monitoring the physical parameter by means of the sensors elements (21, 31) of the at least two sensor strands (20, 30).

8. The subsea pipe monitoring system according to any of the preceding claims, wherein the physical parameter that is monitored by the sensor element (21) of the sensor strand (20) is at least one of strain, temperature or pressure.

9. The subsea pipe monitoring system according to any of the preceding claims, wherein at least some of the sensor elements (21) of the sensor strand are adapted to monitor strain, wherein in these sensor elements, a length of the optical fibre (22) which comprises the fibre Bragg grating of the sensor element (21) is fixedly mounted to the subsea pipe (11) such that a strain induced in the subsea pipe results in a strain being induced in the length of optical fibre (22).

10. The subsea pipe monitoring system according to any of the preceding claims, wherein at least some of the sensor elements (21) of the sensor strand (20) are adapted to monitor pressure, wherein these sensor elements (21) comprise a pressure transducer (37) that is capable of transducing pressure into strain, wherein the fibre Bragg grating (35) of the sensor element (31) is arranged so as to sense strain induced by the pressure transducer (37).

11. The subsea pipe monitoring system according to any of the preceding claims, wherein at least some of the sensor elements (21, 31) of the sensor strand are adapted to monitor strain and/or temperature, wherein these sensor elements (31, 31) comprise at least two fibre Bragg gratings (25, 35).

12. The subsea pipe monitoring system according to claim 11, wherein one of the fibre Bragg gratings is mechanically decoupled from the subsea pipe (11) so as to enable a strain independent measurement of temperature by means of the fibre Bragg grating, or wherein each of the at least two fibre Bragg gratings is adapted to reflect light of a different wavelength, thereby enabling a separation of changes in the reflection of light by the fibre Bragg gratings caused by changes in temperature and by changes in strain.

13. The subsea pipe monitoring system according to any of the preceding claims, wherein the sensor unit (12) is adapted to be arranged subsea in a subsea enclosure (14).

14. The subsea pipe monitoring system according to any of the preceding claims, wherein the fibre Bragg gratings(25, 35) of the sensor elements (21, 31) disposed along the optical fibre (22, 32) are each configured to reflect light of a different wavelength, wherein the sensor unit (12) is adapted to supply light of the different wavelengths to the optical fibre (22, 32) and to collect and detect light reflected by the plural fibre Bragg gratings (25, 35) from the optical fibre, the sensor unit (12) being adapted to resolve the wavelength of the collected light so as to be capable of attributing detected light of a particular wavelength to the reflection of a particular fibre Bragg grating (25, 35).

15. Use of an optical fibre comprising plural fibre Bragg gratings (25, 35) at different positions along the optical fibre (22, 32) for a monitoring of a subsea pipe (11), the fibre Bragg gratings (25, 35) forming sensor elements for monitoring a physical parameter relating to the subsea pipe (11) or its surroundings, each sensor element comprising at least one fibre Bragg grating, wherein the optical fibre (22) and the sensor elements (21) form a sensor strand (20) that is, in use, mounted to the subsea pipe (11), thereby enabling the monitoring of the physical parameter at the positions along the subsea pipe (11) at which the fibre Bragg gratings (25) are located.
